# EUROPÄISCHE PATENTSCHRIFT

(11) **EP 1 769 556 B1**
(45) Veröffentlichungstag und Bekanntmachung des Hinweises auf die Patenterteilung: **18.06.2008**
(21) Anmeldenummer: 05753968.6
(22) Anmeldetag: 09.06.2005
(51) Int. Cl.: H01M 8/10, H01M 4/88

(54) **VERFAHREN ZUR HERSTELLUNG EINER MEMBRAN-ELEKTRODEN-EINHEIT**
METHOD FOR PRODUCING A MEMBRANE-ELECTRODE UNIT
PROCEDE POUR REALISER UNE UNITE MEMBRANE-ELECTRODE

(30) Priorität: 09.07.2004 DE 102004033679
(43) Veröffentlichungstag der Anmeldung: 04.04.2007
(73) Patentinhaber: tesa AG, 20253 Hamburg (DE)
(72) Erfinder: NEUBERT, Ingo, 22850 Norderstedt (DE); KÖNIG, Sven, D-22880 Wedel (DE); KEITE-TELGENBÜSCHER, Klaus, 22529 Hamburg (DE); FAKHRI, Ryad c/o pA Komm.Rat Christian Imlinger, A-8940 Liezen (AT)
(86) Internationale Anmeldenummer: PCT/EP2005/052679
(87) Internationale Veröffentlichungsnummer: WO 2006/005658

(56) Entgegenhaltungen:
- WO-A-02/061871
- WO-A-03/074596
- US-B1- 6 641 862

## Beschreibung

Die Erfindung betrifft ein Verfahren zur Herstellung einer mit Katalysatormaterial beschichteten ionenleitfähigen Membran, welche in elektrochemischen Zellen verwendet werden kann.

Eine Membran-Elektroden-Einheit (MEA) besteht aus einer Polymerelektrolyt-Membran (PEM), welche auf beiden Seiten mit jeweils einer Katalysatorschicht versehen ist. Eine der Katalysatorschichten ist als Anode z.B. für die Oxidation von Wasserstoff und die zweite Katalysatorschicht als Kathode z.B. für die Reduktion von Sauerstoff ausgebildet. Auf der Katalysatorschicht können weiterhin Gasverteilerschichten aufgebracht sein. Die Gasverteilerschichten bestehen gewöhnlich aus Kohlefaserpapier oder Kohlefasergewebe und ermöglichen einen guten Zugang der Reaktionsgase zu den Reaktionsschichten und eine gute Ableitung des Zellenstroms.

Die Leistungsdaten einer Brennstoffzelle hängen entscheidend von der Qualität der auf die PEM aufgebrachten Katalysatorschichten (Elektroden) ab. Die Schichten sind zumeist porös und bestehen aus einem protonenleitenden Polymer (Ionomer) und einem darin dispergierten feinteiligen Elektrokatalysator, der die jeweilige Reaktion (Oxidation von Wasserstoff beziehungsweise Reduktion von Sauerstoff) katalytisch unterstützt. In diesen Schichten bilden sich sogenannte Drei-Phasen-Grenzflächen aus, wobei das Ionomer in direktem Kontakt mit dem Elektrokatalysator und den über das Porensystem an die Katalysatorpartikel herangeführten Gasen steht. In der Mehrzahl werden sogenannte Trägerkatalysatoren verwendet, bei denen katalytisch aktive Platingruppenmetalle in hochdisperser Form auf die Oberfläche eines leitfähigen Trägermaterials aufgebracht wurden. Als Trägermaterialien haben sich feinteilige Ruße bewährt.

Das Katalysatormaterial kann als pulvrige Mischung oder als flüssige bzw. pastöse Zubereitung vorliegen. Die pastenförmigen Zubereitungen zur Herstellung der Katalysatorschichten werden im folgenden als Tinten oder Katalysatortinten bezeichnet Sie enthalten neben dem Trägerkatalysator in der Regel ein lösliches, protonenleitendes Material als Bindemittel, ein oder mehrere Lösungsmittel und gegebenenfalls hochdisperse, hydrophobe Materialien und Porenbildner. Die Katalysatortinten lassen sich nach der Art der verwendeten Lösungsmittel unterscheiden. Es gibt Tinten, die überwiegend organische Lösungsmittel enthalten und solche, die überwiegend Wasser als Lösungsmittel einsetzen.

Die Bindemittel sind in der Technik gut bekannt. Bevorzugte Bindemittel sind perflourierte Sulfonylfluorid-Polymere. Solche Bindemittel sind unter dem Handelsnamen Nafion von I.E. du Pont zu erhalten. Weitere verwendete Bindemittel umfassen Fluorkohlenstoff-Polymere wie Polytetrafluorethylen und Polyhexylfluorethylen.

Es ist auch bekannt, Hilfsstoffe in die Tintenzusammensetzung einzuarbeiten, um eine Suspension der katalytisch aktiven Teilchen und/oder des lonomers zu bilden oder das Aufdrucken der Tinte auf die Oberfläche der Membran zu erleichtern Jedoch wechselwirken solche Hilfsstoffe nachteilig mit vielen lonomeren in Tinte und Membran. Weitere Hilfsstoffe werden als Viskositätsregler eingesetzt.

Die Gasverteilerschichten bestehen gewöhnlich aus grobporigem Kohlefaserpapier, Kohlefaservlies, Kohlefasergelege oder Kohlefasergewebe mit Porositäten bis zu 90%.

Zur Nutzung von Brennstoffzellen als elektrische Energiequelle werden viele Membran-Elektrodeneinheiten zur Bildung eines Brennstoffzellenstapels übereinander angeordnet. Zwischen den einzelnen Membran-Elektrodeneinheiten werden sogenannte Bipolarplatten eingefügt, die über entsprechende Kanäle die Reaktionsgase an die Elektroden der Brennstoffzellen heranführen und die entstehenden Reaktionsprodukte abführen. Ausserdem übernehmen sie die Zu- und Ableitung des Zellenstroms.

Die Verwendung dieser Brennstoffzellenstapel für stationäre oder mobile Einsatzzwecke, z.B. für Hausenergiestationen oder den elektrischen Antrieb von Kraftfahrzeugen, erfordert großtechnische Produktionsverfahren für die Membran-Elektrodeneinheiten.

Zum Aufbringen der Katalysatorschicht auf die Membran können Direktbeschichtungsverfahren und Laminierverfahren unterschieden werden.

Bei Direktbeschichtungsverfahren, wird die üblicherweise in einem Lösungsmittel vorliegende Tinte durch Drucken, Rakeln, Rollen, Walzen, Pinseln oder Sprühen direkt auf die Membran aufgebracht, dort getrocknet und ggf. nachbehandelt Das direkte Aufbringen von Katalysatortinten auf in protonierter Form vorliegende Membranen erweist sich als schwierig. Insbesondere organische Lösemittel in der Tinte führen hierbei zu einem Quellen und Verziehen der Membran (EP 0 622 861). US 6,074,692 beschreibt ein Verfahren, bei dem die Dimensionsstabilität der Membran durch aufwändige mechanische Fixierungen sichergestellt werden soll. Um dies zu umgehen werden für dieses Verfahren häufig nichtazidische (z.B. Na⁺- oder K⁺-) Formen der Membran und des Binders der Tinte eingesetzt, was mindestens einen weiteren Verfahrensschritt zur Rückprotonierung erfordert, wie in EP 0 797 265 beschrieben.

Bei Laminierverfahren wird die Tinte zunächst auf einen Hilfsträger aufgebracht und getrocknet oder noch feucht dann auf die Membran laminiert, wonach der Hilfsträger entfernt wird. Alternativ wird die Tinte zunächst auf die Gasverteilerschicht aufgebracht, auch dieses kann direkt oder in einem weiteren Laminierverfahren geschehen, und dann die beschichtete Gasverteilerschicht auf die Membran laminiert.

Als Hilfsträger mit Trenneigenschaften sind grundsätzlich antiadhäsive oder antiadhäsiv ausgerüstete Papiere oder Folien bekannt. Dabei werden insbesondere für einen kontinuierlichen Beschichtungs- und Laminierprozess hohe Anforderungen an die Materialdicke, die Dickenkonstanz (geringe Toleranzen) und Planlage (Dimensionsstabilität) gestellt. Als Papiere werden hochverdichtete Glassin-Papiere, Soft-Calendered-Papiere, Machine-Finished-Papiere, gestrichene (Clay Coated) Papiere und polymerbeschichtete (im wesentlichen Polyolefine) Papiere eingesetzt. Als Folienmaterialien sind alle bekannten Thermoplaste wie Polyolefine, Polyether, Polyester, Vinylpolymere und Polyamide denkbar, bevorzugt werden PET, PI, PP und PE.

Als Trennsysteme finden Silikone, Paraffine, Wachse, Fluorpolymere (z.B. PTFE, PVDF), Polyimid oder Polyolefine (PE, PP) Verwendung. Die wesentlichen bekannten silikonbasierten Trennsysteme (Organopolysiloxane) sind in der Firmenschrift von Dow Corning Nr. CFY01066 / 30-001A-01: Solutions for Release Coating Success, 2001, dargestellt. Es handelt sich dabei um Systeme, die nach dem Aufbringen auf das Trägermaterial vernetzt werden. Die Silikonsysteme unterscheiden sich unter anderem durch die Vernetzungsart. Organopolysiloxane (unter diesem Begriff sollen im Rahmen dieser Erfindung auch oligomere Siloxane verstanden werden) vernetzen nach Additions-, Kondensations-, radikalischen oder kationischen Mechanismen, wobei die ersten beiden sowie die radikalische UV-Vernetzung die größte Bedeutung erlangt haben.

Die Kondensationsvernetzung beruht beispielsweise auf der Reaktion von α-ω-Dihydroxypolydimethylsiloxan mit Kieselsäureestern in Anwesenheit von Katalysatoren wie Dibutylzinndilaurat oder Zinn(II)oktat. Die Reaktionsgeschwindigkeit hängt dabei von der Funktionalität und Konzentration des Vernetzers, seiner chemischen Struktur und der Art des Katalysators ab. Die Additionsvernetzung beruht auf der Addition von SiH an Doppelbindungen. Die verwendeten Katalysatoren sind Salze und Komplexe von Edelmetallen wie Platin, Palladiums oder Rhodium. Die Reaktion läuft schon bei Raumtemperatur ab, wenn Olefinkomplexe der Platinmetalle verwendet werden. Additionsvernetzende Organopolysiloxane für die Verarbeitung bei erhöhter Temperatur enthalten stickstoffhaltige Platinkomplexe. Bei der radikalischen Vernetzung verläuft die Vernetzungsreaktion über die Bildung freier Radikale. Als Radikalbildner weden verschiedene Peroxide verwendet, die als Initiatoren der radikalischen Reaktion wirken. Der Einbau von Vinylgruppen in das Polymer ermöglicht eine gezieltere Vernetzung. Eine radikalische Vernetzung ist auch die Strahlenvernetzung mittels ultraviolettem Licht, Elektronen- oder Gammastrahlen.

Als Hilfsträger für Katalysatorschichten werden nach dem Stand der Technik PTFE-Folien oder Platten (US 5.211.984, EP 0 622 861, WO 02/061871), geeignetes Papier (EP 0 622 861), Polyimidfolie (EP 1 021 847) oder mikrostrukturierte bzw. mikroraue Folien (EP 0 622 861) eingesetzt Beim Laminieren der getrockneten Katalysatorschicht ist ein Verpressen des Verbundes bei erhöhter Temperatur notwendig. Typische Parameterbereiche sind für den Druck 500 - 50.000 kPa, für die Temperatur 100 bis 300 °C und für die Presszeit eine Minute bis zwei Stunden. Gute Ergebnisse werden dabei nach EP 0622 861 mit einem Druck von 1380 kPa und einer Temperatur von etwa 130 °C erreicht, wobei Druck und Temperatur über zwei Minuten lang aufgebracht werden.

Durch Verwendung mikrostrukturierter bzw. mikrorauer Folien (EP 0 622 861) konnten die zum Transfer notwendigen Temperaturen auf unter 120 °C gesenkt werden. Dabei liegt der notwendige Druck aber weiterhin bei 5.000 bis 8.000 kPa und die Presszeit bei 3 min.

In der DE 195 09 749 A1 wird ein Laminierverfahren zur kontinuierlichen Herstellung eines Verbundes aus Elektrodenmaterial, Katalysatormaterial und einer Festelektrotytmembran beschrieben, wobei aus einem das Elektrodenmaterial, das Katalysatormaterial und das Festelektrolytmaterial umfassenden katalytischen Pulver eine katalytische Schicht auf einem Träger hergestellt wird. Als Festelektrolytmaterial wird Nation verwendet, zusätzlich wird PTFE als hydrophobierendes Medium vorgeschlagen, welches gleichzeitig eine Bindemittelfunktion übernimmt Diese katalytische Schicht wird auf einer dem Träger abgewandten Seite zum Erweichen des Festelektrolytmaterials aufgeheizt und unter hohem Druck auf die Festelektrolytmembran aufgewalzt. Dieser Vorgang wird für beide Seiten der Festelektrolytmembran vorgenommen, so dass das Verfahren eine komplette Membran-Elektrodeneinheit liefert. Der Träger für die katalytische Schicht ist hier nicht als Hilfsträger zu sehen, sondern dient in der fertigen Membran-Elektrodeneinheit bevorzugt als Gasverteilerschicht und wird nicht entfernt.

Weiterhin wird in der WO 97/23919 ein Verfahren zur Herstellung von Membran-Elektrodeneinheiten beschrieben, wobei das Verbinden der Polymerelektrolyt-Membran, der Elektrodenschichten und der Gasverteilerschichten kontinuierlich in einem Walzverfahren durchgeführt wird. Hierbei wird kein Hilfsträger verwendet.

Die US 6,074,692 beschreibt ebenfalls ein kontinuierliches Verfahren zur Beschichtung einer Polymerelektrolyt-Membran auf beiden Seiten gleichzeitig mit Katalysatorschichten unter Verwendung entsprechender Katalysatortinten, jedoch wird hierbei die Tinte direkt auf die Membran aufgebracht. Die indirekte Transferbeschichtung mittels eines Hilfsträgers wird hier als teuer, langsam und kompliziert in der Bahnführung beschrieben.

Nachteilig bei den dem Stand der Technik entsprechenden Laminiermaterialien und den daher notwendigen Verfahrensparametern sind die rigiden Bedingungen von hoher Temperatur und hohem Druck, die durch die thermische und mechanische Belastung leicht zu einer Schädigung der Membran führen können und darüber hinaus einen hohen Energiebedarf haben. Die notwendigen langen Presszeiten verlangen in der Regel nach einem Batchverfahren und erschweren ein kontinuierliches Laminieren.

Aufgabe der Erfindung war es, die oben beschriebenen Nachteile beim Auflaminieren eines die Katalysatorschicht enthaltenden Verbundmaterials zu vermeiden und Materialien und Prozesse zur Verfügung zu stellen, die eine von Risiken der Schädigung reduzierte und in großvolumigem Maßstab einzusetzende Möglichkeit schaffen, Katalysatorschichten auf eine Membran aufzubringen.

Die Aufgabenstellung konnte überraschenderweise und für den Fachmann unvorhersehbar durch ein Verfahren gelöst werden, bei welchem das Katalysatormaterial zunächst auf einen abhäsiven Hilfsträger beschichtet wird und dann auf die Membran laminiert wird, wobei der Hilfsträger zumindest einseitig mit einem kondensations- oder strahlenvernetzten Organopolysiloxan beschichtet ist. Gegenstand der Unteransprüche sind vorteilhafte Weiterbildungen des Verfahrens, Ausbildungen des Hilfsträgers und vorteilhafte Verwendungen.

Die Laminierung der Schicht des Katalysatormaterials kann dabei direkt vom Hilfsträger auf die Membran geschehen. In einer weiteren Form des erfindungsgemäßen Verfahrens geschieht die Laminierung der Schicht des Katalysatormaterials vom Hilfsträger nicht direkt auf die Membran, sondern auf ein zweites Trägermaterial; der dadurch entstehende Verbund kann dann in einem zweiten Schritt auf die Membam laminiert werden.

Da bei der Brennstoffzelle zusätzlich zur Katalysatorschicht noch Gasverteilerschichten verwendet werden, ist eine alternative Ausgestaltung des Verfahrens insbesondere darin zu sehen, dass zunächst die Katalysatorschicht vom Hilfsträger auf die Gasverteilerschicht (im Sinne des zweiten Trägermaterials) laminiert wird und dieser Verbund dann auf die Membran.

Der Vorteil des erfindungsgemäßen Verfahrens ist darin zu sehen, dass durch Verwendung der beschriebenen Klassen von Organopolysiloxanen - andere Trennbeschichtungen wie PTFE, Polyolefine oder additionsvernetzte Organopolysiloxane stellten sich als weniger geeignet heraus - nur sehr niedrige Kräfte zum Ablösen der Katalysatorschicht vom Hilfsträger notwendig sind, die einen Laminierprozess ermöglichen der bei entsprechenden Temperaturen und Drücken mit sehr geringen Einwirkungszeiten auskommt Somit werden bei Verwendung einer Laminierung zwischen zwei einander entgegenwirkenden Walzen sehr kurze Presszeiten möglich, was wiederum die möglichen Bahngeschwindigkeiten erhöht

Bevorzugte Organopolysiloxane sind Polyalkylsiloxane, besonders bevorzugt werden Polydimethylsiloxane. Als funktionelle Gruppen werden bevorzugt Hydroxy- oder Vinylgruppen eingesetzt, aber auch andere Gruppen, die über eine Kondensation oder strahleninduzierte radikalische Reaktion eine Vernetzung herbeiführen können, sind geeignet. Entsprechende Verbindungen sind in Tomanek, A.: Silicone & Technik, Hanser-Verlag, München 1990, in Noll, W.: Chemie und Technologie der Silicone, Verlag Chemie, Weinheim 1975, sowie den Patentschriften DE 43 17 909, DE 43 36 703 ausführlich beschrieben und sollen hierüber eingebunden sein.

Als Materialien für den Hilfsträger können Papiere, Folien, textile Flächengebilde oder Verbunde davon eingesetzt werden. Aufgrund der hohen mechanischen Stabilität, der hohen Wärmeleitfähigkeit und Temperaturbeständigkeit werden Metallfolien bevorzugt. Vorteile bezüglich des niedrigen Preises haben Polymerfolien wie solche aus Polyester, Polyolefinen, Polyamid, Polycarbonat, Polyacrylat und Polymethacrylat. Als Papiere werden hochverdichtete Glassin-Papiere, Soft-Calendered-Papiere, Machine-Finished-Papiere, gestrichene Papiere und polymerbeschichtete Papiere bevorzugt.

In einer vorteilhaften Ausführung wird der abhäsive Effekt der Beschichtung des Hilfsträgers durch eine regelmäßige oder unregelmäßige raue Mikrostruktur des Hilfsträgermaterials unterstützt.

In einer aufgrund der niedrigen Kosten besonders bevorzugten Ausführung des Verfahrens wird der Hilfsträger mehrfach verwendet. Dies kann diskontinuierlich durch Aufwickeln des Hilfsträgers nach dem Laminieren der Katalysatorschicht auf die Membran und nachfolgendes Wiederbeschichten des Hilfsträgers mit Katalysatortinte geschehen oder kontinuierlich durch Ausführung des Hilfsträgers als umlaufende Bahn.

Das Katalysatormaterial kann als pulvrige Mischung oder als flüssige bzw. pastöse Tinte vorliegen. Es enthält neben den katalytisch aktiven Komponenten in der Regel ein lösliches, protonenleitendes Material als Bindemittel und gegebenenfalls hochdisperse, hydrophobe Materialien, weitere Bindemittel und Porenbildner sowie im Fall der Tinte ein oder mehrere Lösungsmittel.

Als katalytisch aktive Komponenten werden bevorzugt die Metalle der Platingruppe des Periodensystems der Elemente eingesetzt, die mit weiteren Metallen, wie Cobalt, Chrom, Wolfram, Molybdän, Eisen, Nickel, Kupfer oder Ruthenium legiert sein können. Vorteilhaft werden sogenannte Trägerkatalysatoren verwendet, bei denen die katalytisch aktiven Platingruppenmetalle in hochdisperser Form auf die Oberfläche eines leitfähigen Trägermaterials aufgebracht wurden. Als Trägermaterialien haben sich feinteilige Ruße bewährt.

Als Katalysatortinten lassen sich alle nach dem Stand der Technik bekannten Tinten verwenden. Diese lassen sich nach der Art der verwendeten Lösungsmittel unterscheiden. Es gibt Tinten, die überwiegend organische Lösungsmittel enthalten und solche, die überwiegend Wasser als Lösungsmittel einsetzen. So beschreiben die Schriften DE 196 11 510, US 5,871,552 und US 5,869,416 Katalysatortinten, die überwiegend organische Lösungsmittel enthalten, während die EP 0731 520 A1 Katalysatortinten beschreibt, bei denen ausschliesslich Wasser als Lösungsmittel eingesetzt wird. In DE 100 37 074 werden Tinten beschrieben, die sowohl Wasser wie auch organische Lösemittel enthalten. In DE 198 12 592 werden Tinten beschrieben, die mehrere, nicht miteinander mischbare organische Lösungsmittel enthalten.

US 5,871,552 schlägt vor, der Katalysatortinte ein weichmachendes, hochsiedendes Lösemittel zuzugeben, welches auch nach dem Trocknungsprozess in der Katalysatorschicht verbleibt und die Haftung der Ionomerpartikel untereinander verbessert und somit zur besseren Ionenleitfähigkeit in der Katalysatorschicht beiträgt. Auch diese Tinte soll eingeschlossen sein.

Vorteilhaft werden in Tinten mit organischen Lösungsmitteln angesehen, da diese zu einem stärkeren Quellen der Membran führen, was wiederum zu einer besseren Verbindung zwischen Membran und Katalysatorschicht führt (DE 100 50 467). Nachteilig bei Tinten mit hohem Gehalt an organischen Lösungsmitteln ist insbesondere bei einer Massenfertigung die hohe Zündgefahr, welche erheblichen Sicherheitsaufwand erfordert, sowie die erhebliche Emission an organischen Verbindungen. Bevorzugt werden Tinten mit nur geringem Anteil an organischen Lösemitteln.

Die erfindungsgemäß in dem Katalysatormaterial verwendeten Bindemittel sind in der Technik gut bekannt. Bevorzugte Bindemittel sind perflourierte Sulfonylfluorid-Polymere. Die Sulfonylfluorid-Polymere (und die entsprechenden perfluorierten Sulfonsäure-Polymere) sind in der Regel fluorierte Polymere mit Seitenketten, die die Gruppe CF₂CFR₁SO₂X enthalten, wobei R_{f} für F, Cl, CF₂Cl oder einen C₁-C₁₀ Perfluoralkylrest steht und X für F oder Cl, vorzugsweise für F steht. Üblicherweise enthalten die Seitenketten -OCF₂CF₂CF₂SO₂X- oder -OCF₂CF₂SO₂F-Gruppen, vorzugsweise letztere. Auch Polymere, die die Seitenkette -OCF₂CF{CF₃}O)ₖ-(CF₂)ⱼ-SO₂F enthalten, wobei k für 0 oder 1 steht und j für 2,3,4 oder 5 steht, sowie Polymere, die die Seitenkette - CF₂CF₂SO₂X enthalten, wobei X für F oder Cl steht, werden beschrieben. Bevorzugte Polymere enthalten die Seitenkette -(OCF₂CFY)ᵣ-OCF₂CFR_{f}SO₂X, wobei R_{f} und X die oben genannten Definitionen besitzen, Y für CF₃ oder CCl₃ und r für 1,2 oder 3 steht. Besonders bevorzugt sind Copolymere, die die Seitenkette -OCF₂CF{CF₃}-OCF₂CF₂SO₂F enthalten. Solche Bindemittel sind unter dem Handelsnamen Nafion von I.E. du Pont zu erhalten. Weitere verwendete Bindemittel umfassen Fluorkohlenstoff-Polymere wie Polytetrafluorethylen und Polyhexylfluorethylen.

Während die Bindemittel bei den Tinten in der Regel in Lösung oder als Suspension im Lösemittel vorliegen, beschreiben US 3,134,697 und DE 195 09 749 auch thermoplastische Materialien oder Präpolymere, die als Bindemittel in lösemittelfreien pulverförmigen Katalysatorabmischungen eingesetzt werden. diese Materialien sollen als erfindungsgemäß eingeschlossen sein.

Vorteilhaft ist es, Hilfsstoffe in die Tintenzusammensetzung einzuarbeiten, um eine Suspension der katalytisch aktiven Teilchen und/oder des lonomers zu bilden. Glycerine wie Tetrabutylammoniumhydroxydglycerin, verschiedene Glykole wie Ethylenglycol oder Alkoxy- bzw. aryloxyalkohole wie 1-Methoxy-2-Propanol sind bekannte Hilfsstoffe, die das Beschichten der Tinte auf die Oberfläche des Hilfsträgers erleichtern. Weitere Hilfsstoffe vom Cellulosetyp, wie Carboxymethylcellulose, Methylcellulose, Hydroxyethylcellulose, sowie Cellulose, Polyethylenglycol, Polyvinylalkohol, Polyvinylpyrrolidin, Natriumpolyacrylat und Polyvinylether werden als Viskositätsregler eingesetzt.

Auch die in EP 1 021 847 genannten Nanostruktur-Katalysatormaterialien, z.B. platinbeschichtete Haarkristalle können bei dem erfindungsgemäßen Verfahren verwendet werden. Diese werden vorteilhaft in der in der oben genannten Schrift beschriebenen Weise auf dem Hilfsträger abgeschieden.

Feste Katalysatormischungen können durch Streu- oder Zerstäubungsverfahren aufgetragen werden, wobei elektrische Aufladungen unterstützend eingesetzt werden können. Die Katalysatortinte kann durch alle dem Fachmann bekannten Auftragsverfahren auf den Hilfsträger aufgetragen werden, z.B. durch Rakeln, Pinseln, Walzenauftrag, Druckverfahren, wie z.B. Rasterwalzen, Siebdruck, Offsetdruck oder Flexodruck, Düsenauftragsverfahren, Sprühen oder Gießen. Dies kann diskontinuierlich Stück für Stück erfolgen, bevorzugt wird aber das Aufbringen in einem kontinuierlichen Prozess.

Da die Ränder der Membran in der Regel zwischen Bipolarplatten in einem Stack fixiert sind, ist eine Beschichtung dieser Ränder für die Funktion nicht zwingend notwendig. Um entsprechend Kosten für das Katalysatormaterial zu sparen, ist es vorteilhaft, nur der aktiven Fläche der Membran entsprechende diskontinuierliche Segmente auf dem Hilfsträger zu beschichten. Dies erleichtert auch die Abdichtung der Membran zu den Platten. Diskontinuierliche Segmente werden bevorzugt mit Druckverfahren hergestellt, wobei hier auch Druckverfahren zum Verarbeiten pulvriger Katalysatorzubereitungen eingeschlossen sein sollen.

Da das Katalysatormaterial in der Regel in einem Lösungs- oder Dispergiermittel gelöst bzw. dispergiert vorliegt, muss dieses Medium nach der Beschichtung abgedampft werden. Dazu werden in der Regel Konvektionstrockner eingesetzt, aber auch andere dem Fachmann bekannte Trocknungsverfahren wie z. B. die Aufheizung mit elektromagnetischen Wellen (HF oder Mikrowellen) sind einsetzbar. Um eine Rissbildung in der Katalysatorschicht zu vermeiden und die Gefahr der Selbstentzündung zu minimieren, ist es besonders vorteilhaft, dass die Temperatur des Wärmeübertragungsmediums im Konvektionstrockner während des Trockenvorgangs von einer niedrigeren Starttemperatur auf eine höhere Zwischen- oder Endtemperatur steigt. Dabei liegen Start und Zieltemperatur bevorzugt zwischen 20 und 200 °C, besonders bevorzugt zwischen 40 und 120 °C. Dieser Gradient kann durch ein Aufheizen des Trocknungsmediums während der Trocknungsphase oder auch durch mehrere nacheinander durchlaufene Zonen ansteigender Temperatur erreicht werden.

Nach dem Trocknen kann der Verbund in einem Wasserbad mit erhöhter Temperatur, bevorzugt bei 80 °C, gewässert werden, um eventuell noch nicht vollständig entfernte organische Lösungsmittel aus der Katalysatorschicht heraus zu waschen. Diesem Bad können noch weitere Hilfsstoffe wie spezielle Lösemittel (z.B. N-Methyl-2-Pyrrolidon) oder Tenside zugesetzt werden. Dies trägt zur Verlängerung der Funktionsdauer der MEA bei.

Um einen engeren Verbund der Katalysatorschicht mit der Membran zu erreichen, kann es auch vorteilhaft sein, die Katalysatorschicht auf dem Hilfsträger nicht vollständig zu trocknen, sondern einen definierten Anteil Lösungs- bzw. Dispergiermittel in der Schicht zu belassen. Dieses kann dann während des Laminierens die Membran leicht anquellen und so den Verbund der Materialien verbessern.

Die Polymerelektrolyt-Membran (PEM) besteht aus Protonen leitenden Polymermaterialien. Diese Materialien werden auch kurz als Ionomere bezeichnet Geeignete Polymere umfassen Copolymere eines Vinylmonomeren wie Tetrafluorethylen und Chlortrifluorethylen und eines Perfluorvinylmonomers mit einer Ionentauschergruppe, wie z.B. eine Sulfonsäuregruppe, Carbonsäuregruppe und Phosphorsäuregruppe oder eine reaktive Gruppe, die in eine lonentauschergruppe umgewandelt werden kann. Verwendbare Polymere werden beispielsweise in DE 42 41 150, US 4,927,909, US 5,264,542, EP 0 574 791, DE 42 42 692, DE 19 50 027, DE 19 50 026 und in DE 19 52 7435 beschrieben, worauf hiermit explizit Bezug genommen wird. Bevorzugt wird ein Tetrafluorethylen-Fluorvinylether-Copolymer mit Sulfonsäuregruppen verwendet Dieses Material wird zum Beispiel unter dem Handelsnamen Nafion von E.I. du Pont oder Flemion von Ashai Glass vertrieben. Es sind jedoch auch andere, insbesondere fluorfreie lonomermaterialien, wie sulfonierte Polyetherketone oder Arylketone oder Polybenzimidazole (z.B. Celtec von Celanese/PEMEAS) einsetzbar. Auch nichtionische Formen der perfluorierten Polymere sind möglich (EP 0 622 861). DE 42 41 150 beschreibt darüber hinaus die Verwendung einer Vielzahl von in Lösungsmittel löslichen Homo- oder Copolymeren, die einen in Ionen dissoziierbaren Rest aufweisen. Für die Verwendung in Brennstoffzellen oder Elektrolysezellen werden vorteilhaft Membranen mit einer Dicke zwischen 5 und 200 µm eingesetzt.

Das Membranmaterial kann zum Laminieren in der azidischen oder nichtazidischen (z.B. Na⁺- oder K⁺-) Form verwendet werden. Das erfindungsgemäße Verfahren erleichtert insbesondere die Nutzung der azidischen Form, so dass der Schritt der Rückprotonierung entfallen kann.

Die Gasverteilerschichten bestehen gewöhnlich aus grobporigem Kohlefäserpapier oder Kohlefasergewebe mit Porositäten bis zu 90%. Um das Fluten des Porensystems mit dem an der Kathode entstehenden Reaktionswasser zu verhindern, werden diese Materialien mit hydrophoben Materialien imprägniert, zum Beispiel mit Dispersionen von Polytetrafluorethylen (PTFE). An die Imprägnierung schliesst sich eine Calcinierung bei etwa 340 bis 370 °C an, um das PTFE-Material aufzuschmelzen.

Zur Verbesserung des elektrischen Kontaktes zwischen den Katalysatorschichten und den Gasverteilerschichten werden diese häufig auf der der jeweiligen Katalysatorschicht zugewandten Seite mit einer sogenannten Ausgleichsschicht aus Russ und einem Fluorpolymer beschichtet, die porös und wasserabstossend und zugleich elektrisch leitend ist und ausserdem eine einigermaßen glatte Oberfläche besitzt. Dazu wird in der Regel eine Paste aus Ruß und PTFE verwendet, die nach dem Aufbringen getrocknet und bei 340 bis 370 °C calziniert wird.

Das Laminieren der getrockneten Katalysatorschicht vom Hilfsträger auf die Membran oder Gasverteilerschicht erfolgt unter Einwirkung von Druck und Temperatur, die jeweils über eine definierte Zeit wirken. Dies kann erfindungsgemäß diskontinuierlich z.B. in einer beheizten Presse, oder für eine Großserienfertigung bevorzugt kontinuierlich erfolgen. Hier sind alle dem Fachmann bekannten kontinuierlichen Laminier- bzw. Heizpressverfahren anwendbar, z.B. das Laminieren in einer Bandpresse oder zwischen Walzen. Aufgrund des geringeren technischen Aufwands und des dementsprechend geringeren Investitionsvolumens wird die Laminierung zwischen Walzen besonders bevorzugt. Das Laminieren beider Seiten der Membran kann nacheinander oder gleichzeitig erfolgen. Bevorzugt wird das gleichzeitige Laminieren, da hierbei die Membran nur ein Mal thermisch belastet wird sowie Zeit sowie ggf. die Investition für eine zweite Laminierstation eingespart werden.

Für den Verbund der Katalysatorschicht mit der Membran sowie die Verfestigung der Katalysatorschicht in sich selbst sind Druck, Temperatur und Zeit wesentliche Parameter. Bei der Laminierung zwischen Walzen ist bei einer für die Großserienfertigung wünschenswerten Prozessgeschwindigkeit von mehr als 0,5 m/min die Presszeit sehr kurz. Bei dieser Laminiergeschwindigkeit und einer angenommen Linienbreite von etwa 1 mm ergibt sich eine Presszeit von nur 0,1 Sekunden. Mit zunehmendem Laminierwalzendurchmesser nimmt bei konstanter Bahngeschwindigkeit die Linienbreite und damit die Presszeit zu. Vorteilhaft ist es daher, den Durchmesser der Laminierwalzen größer als 200 mm zu gestalten, bevorzugt größer als 400 mm. Um bei konstanter Bahngeschwindigkeit die Presszeit weiterhin zu verlängern und den Pressdruck zu vergleichsmäßigen ist es weiterhin vorteilhaft, zumindest eine Laminierwalze gummielastisch auszuführen oder mit einer gummielastischen Beschichtung, z.B. aus Silikongummi, zu versehen. Durch die Elastizität verbreitert sich die Kontaklinie, so dass die effektive Presszeit zunimmt.

Um bei relativ kurzen Presszeiten -diskontinuierlich oder kontinuierlich- zu laminieren, ist es vorteilhaft, die Temperatur der pressenden Flächen relativ hoch zu wählen. Bei zu hohen Temperaturen kommt es allerdings zu einer Schädigung der Membran oder des Hilfsträgers. Vorteilhafte Temperaturen liegen daher in einem Bereich zwischen 80 und 250 °C. Bevorzugt wird eine Laminiertemperatur zwischen 140 und 200 °C.

Um bei relativ kurzen Presszeiten - diskontinuierlich oder kontinuierlich - zu laminieren ist es weiterhin vorteilhaft, den Druck relativ hoch zu wählen. Bei zu hohem Druck kommt es allerdings zu einer Schädigung der Membran oder des Hilfsträgers. Vorteilhafte Drücke liegen für ein erfindungsgemäßes Flachbettlaminierverfahren im Bereich von 500 bis 10.000 kPa, für ein Walzenlaminierverfahren bei 10 bis 1.000 N/cm.

Besonders bevorzugt wird ein Walzenlaminierverfahren, bei dem der Liniendruck kleiner als 200 N/cm, die Temperatur zwischen 120 und 200 °C und die Prozessgeschwindigkeit größer als 1 m/min ist.

Um die Prozessgeschwindigkeit weiterhin zu steigern, kann es vorteilhaft sein, zumindest eines der zu laminierenden Materialien vorzuheizen. Dies kann durch Strahlung (z.B. durch IR-Strahler), Konvektion (z.B. durch einen Heißluftstrom) oder Kontaktheizung (z.B. durch eine Umschlingung der beheizten Laminierwalze) erfolgen.

Vorteilhaft ist es weiterhin, die Beschichtung des Hilfsträgers und zumindest die Laminierung einer Seite der Membran in-line durchzuführen.

Die mit dem erfindungsgemäßen Verfahren hergestellten Membranen können vorteilhaft in elektrochemischen Zellen wie Elektrolysezellen oder Brennstoffzellen verwendet werden.

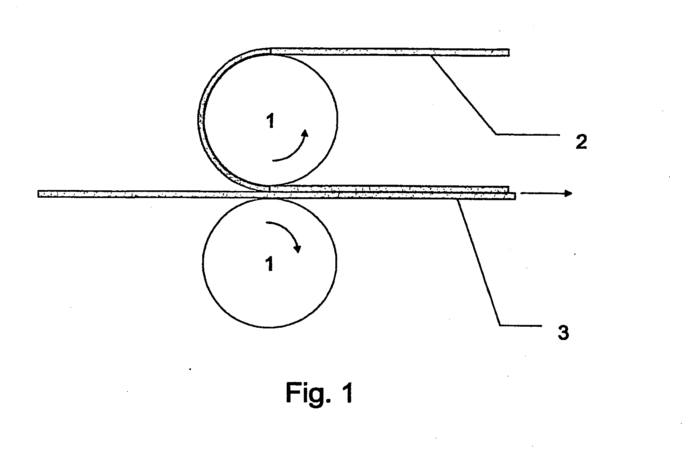

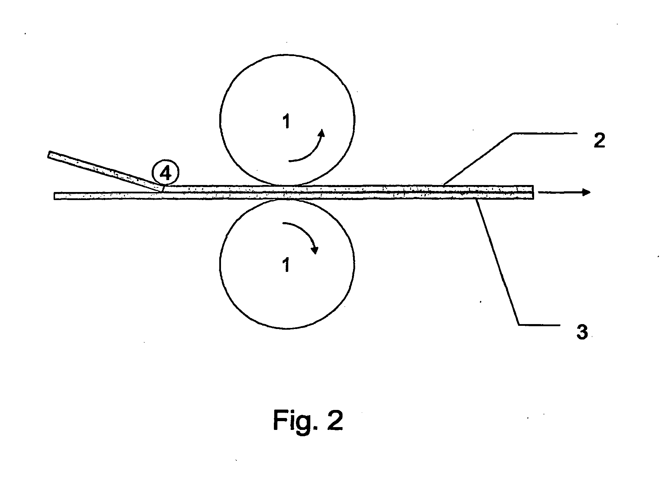

Anhand der Figuren 1 und 2 soll das erfindungsgemäße Verfahren illustriert werden, ohne sich durch die Wahl der dargestellten Ausführungsformen der Erfindung unnötig beschränken zu wollen.

Es zeigen:
- Figur 1:: Walzenlaminieren mit Vorheizung des Hilfsträgers mittels Umschlingung einer Laminierwalze
Es bedeuten:
1. Laminierwalzen
2. Hilfsträger mit Katalysatorschicht
3. Membran
- Figur 2:: Walzenlaminieren ohne Vorheizung des Hilfsträgers
Es bedeuten:
1. Laminierwalzen
2. Hilfsträger mit Katalysatorschicht
3. Membran
4. Bahnführungswalze

Weitere Merkmale und Vorteile der erfindungsgemäßen Lösung sind Gegenstand der nachfolgend beschriebenen Ausführungsbeispiele, die aber die Erfindung nicht weiter einschränken sollen.

### Beispiele:

### Verwendete Materialien:

Für die Anfertigung einer Membran-Elektrodeneinheit gemäß dem vorgeschlagenen Verfahren wurde Katalysatortinte mit der folgenden Zusammensetzung hergestellt:
20,0 g Pt-Trägerkatalysator (Quintech EC-20-PTC, 20 Gew.-% Pt auf Ruß Vulcan XC-72R)
38,0 g Nafion (1.000 EW)
36,0 g Wasser (vollentsalzt)
10,0 g Dipropylenglykol

Die Nafion-Lösung in Wasser/Dipropylenglykol wurde aus einer käuflichen Nation-Lösung (DuPont Nafion DE 1021- Dispersion: 10 Gew.-% Tetrafluorethylen-Fluorvinylether-Copolymer mit Sulfonsäuregruppen in der Protonenform in Wasser), durch Abdestillieren von Wasser und Hinzufügen von Dipropylenglykol hergestellt. In dieser Lösung wurde der Katalysator suspendiert.

Als Polymerelektrolytmembran wurde DuPont Nafion N-112 Membran (Tetrafluorethylen-Fluorvinylether-Copolymer mit Sulfonsäuregruppen in der azidischen Protonenform) verwendet.
Als Hilfsträger wurden die Trennfolien und -papiere gemäß Tabelle 1 verwendet (angegeben jeweils Träger (sofern vorhanden) und Releasesystem der Hilfsträger)

**Tabelle 1: Verwendete Hilfsträger (Referenzen und erfindungsgemäße)**

| **Muster- Nr.** | **Hersteller** | **Bezeichnung** | **Träger** | **Releasesystem** |
|---|---|---|---|---|
| 1 | CS Hyde Company | Kynar 740 | - | PVDF (Polyvinylidenfluorid) |
| 2 | Platotrans | LDPE Folie | - | LDPE |
| 3 | Huhtamaki | OPPF 184 31020 | - | PP |
| 4 | Orbita Film | MF 93149 | - | HDPE |
| 5 | DuPont | FEP 100 | - | PTFE |
| 6 | DuPont | FEP 200 | - | PTFE |
| 7 | DuPont | FEP 300 | - | PTFE |
| 8 | Lauffenberg | KS 900 gelb 52B/52B12 | Natronkraftpapier | additionsvernetztes Silicon |
| 9 | Lauffenberg | PETP/ B50µ 53B | PETP | additionsvernetztes Silicon |
| 10 | Siliconature | Silphan S50 T74A | PETP | additionsvernetztes Silicon |
| 11 | Siliconature | Silphan S50 WB44A | PETP | additionsvernetztes Silicon |
| 12 | Siliconature | Silprop M 80 B44A | BOPP | additionsvernetztes Silicon |
| 13 | tesa | tesafix 4968 - Abdeckung (Innenseite) | MOPP | Kondensationsvernetztes Silicon |
| 14 | tesa | tesafix 4968 - Abdeckung (Außenseite) | MOPP | Kondensationsvernetztes Silicon |
| 15 | Siliconature | Silphane S 23 M 11 A | PETP | Kondensationsvernetztes Silicon |
| 16 | Siliconature | Silphane S 36 M 072 | PETP | Kondensationsvernetztes Silicon |
| 17 | Siliconature | Silphane S 12 M2FH | PETP | UV-vernetztes Silicon |
| 128 | CP Films | UV 50 | PETP | UV-vernetztes Silicon |
| 19 | Siliconature | Silflu 50 B D 07 | PETP | Fluorsilicon |
| 20 | Rexam | Grade 10432 S3Mil CL PET 6J/6J | PETP | Fluorsilicon |
| 21 | CP Films | NSR Grade | PETP | siliconfreies System |
| 22 | DuPont | Kapton 100 HN | - | PI |

### Prüfverfahren:

### Abrieb der Katalysatortinte

Die Abriebfestigkeit der Tinte wurde subjektiv mittels leichten Reibens eines Fingers auf der Katalysatoroberfläche beurteilt. Der Reibedruck ist dabei so gering zu halten, dass sich die Katalysatorpaste nicht durch die aufgebrachte Schubspannung vom Hilfsträger löst. (Letzteres zeigt sich typischerweise durch Lösen einer Fläche der Katalysatorbeschichtung unter dem Finger, die der Druckfläche des Fingers in etwa entspricht) Die Beurteilung erfolgte wie folgt:

| | |
|---|---|
| ++ | kein oder unerheblicher Übertrag auf den Finger, Reibspur in der Katalysatorschicht nicht sichtbar |
| + | geringer Übertrag, Reibspur in der Katalysatorschicht wenig sichtbar |
| - | deutlicher Übertrag, Reibspur in der Katalysatorschicht deutlich sichtbar |
| - | erheblicher Übertrag, Katalysatorschicht zerstört |

### Trennwirkung:

Die Trennwirkung der Hilfsträger wurde mittels eines Klebestreifentests durchgeführt. Dazu wurde ein 15 mm breiter Streifen tesafilm Kristallklar (tesa AG) mittels einer 2 kg schweren Stahlrolle auf die beschichtete und getrocknete Katalysatorphase aufgebracht (3maliges Hin- und Herrollen). Der Tesafilmstreifen wurde dann mit der Hand abgezogen und die Trennwirkung wurde anhand der auf dem Hilfsträger verbleibenden Rückstände der Katalysatorpaste wie folgt beurteilt

| | |
|---|---|
| ++ | keine oder unerhebliche Rückstände |
| + | geringe Rückstände |
| - | partielle deutliche Rückstände |
| - | vollflächige oder nahezu vollflächige Rückstände |

### Laminierbarkeit auf Membran:

Zur Beurteilung der Laminierbarkeit der Katalysatorpaste vom Hilfsträger auf die Membran wurde nach dem Durchführen des Laminierens der Hilfsträger von der Katalysatorschicht abgezogen und die Laminierbarkeit anhand der auf dem Hilfsträger verbleibenden Rückstände der Katalysatorpaste wie folgt beurteilt:

| | |
|---|---|
| ++ | keine oder unerhebliche Rückstände |
| + | geringe Rückstände |
| - | partielle deutliche Rückstände |
| - | vollflächige oder nahezu vollflächige Rückstände |

### Beispiel 1: Trocknung der Katalysatortinte

Die Katalysatortinte wurde mittels eines Rakels mit einem Spaltmaß von 60 µm auf den Hilfsträger Nr. 13 aufgerakelt. Das Trocknen erfolgte in einem Trockenofen, wobei der Vorgang entsprechend der in Tabelle 2 angegebenen Parameter ausgeführt wurde. In Anlehnung an die Offenbarung der US 6,074,692 wurden auch Versuche zur Trocknung der Katalysatortinte unter Verwendung eines Temperaturprofils durchgeführt.

Nach dem Trocknen wurde die Katalysatorschicht optisch beurteilt sowie der Abrieb der Katalysatortinte subjektiv geprüft. Die Ergebnisse sind in Tabelle 2 zusammengefasst.

**Tabelle 2:**

| **Trockenparameter** | **optische Beurteilung der Katalysatorschicht** | **Abrieb der Katalysatortinte** |
|---|---|---|
| 10 min 50°C | gleichmäßig, rissfrei | - |
| 10 min 100°C | Selbstentzündung! | nicht beurteilbar |
| 30 min 50 °C | gleichmäßig, rissfrei | - |
| 10 min 50 °C + 10 min 100 °C | deutlich rissig | + |
| 20 min 25-110°C kontinuiert. Profil | rissfrei | ++ |
| 20 min 60-90°C kontinuierl. Profil | rissfrei | ++ |
| 10 min 60 - 90 °C kontinuiert. Profil | rissfrei | + |

Diese Ergebnisse zeigen die Vorteile einer Trocknung mittels Temperaturprofil, insbesondere bezüglich der rissfreien Ausbildung der Katalysatorschicht. Dies ist für die Funktion und Lebensdauer einer elektrochemischen Zelle von erheblicher Bedeutung.

### Beispiel 2: Untersuchung der Trennwirkung verschiedener Trennsysteme

Die Katalysatortinte wurde mittels eines Rakels mit einem Spaltmaß von 60 µm auf die verschiedenen Hilfsträger aufgerakelt. Das Trocknen erfolgte in einem Trockenofen, wobei der Vorgang bei einer Temperatur von 60°C startete und die Temperatur innerhalb von 20 min weitgehend linear auf 90 °C anstieg. Nach 20 min wurde der Trockenvorgang beendet.

Nach dem Trocknen ergab sich ein Katalysatorauftrag von 10 - 15 g/m² auf dem Hilfsträger. Der Katalysatorfilm zeigte sich homogen und ohne Risse.

Die Trennwirkung der Releasesysteme wurde mittels des Klebestreifentests geprüft. Die Ergebnisse sind in Tabelle 3 zusammengefasst.

**Tabelle 3: Trennwirkung der Hilfsträger**

| **Muster-Nr.** | **Releasesystem** | **Trennwirkung** |
|---|---|---|
| 1 | PVDF (Polyvinylidenfluorid) | - |
| 2 | LDPE | - |
| 3 | PP | - |
| 4 | HDPE | - |
| 5 | PTFE | - |
| 6 | PTFE | - |
| 7 | PTFE | - |
| 8 | additionsvernetztes Silicon | - |
| 9 | additionsvernetztes Silicon | - |
| 10 | additionsvernetztes Silicon | - |
| 11 | additionsvemetztes Silicon | - |
| 12 | additionsvernetztes Silicon | - |
| 13 | kondensationsvernetztes Silicon | ++ |
| 14 | kondensationsvernetztes Silicon | ++ |
| 15 | kondensationsvernetztes Silicon | ++ |
| 16 | kondensationsvernetztes Silicon | + |
| 17 | UV-vernetztes Silicon | + |
| 18 | UV-vernetztes Silicon | + |
| 19 | Fluorsilicon | - |
| 20 | Fluorsilicon | - |
| 21 | siliconfreies System | - |
| 22 | PI | - |

Hier zeigt sich deutlich, dass vorteilhafte Releasesysteme nur innerhalb der kondensationsvernetzten oder UV-vernetzten Siliconsysteme zu finden sind.

### Beispiel 3: Laminieren der Katalysatorschicht auf die Membran unter der Heizpresse

Die Katalysatortinte wurde mittels eines Rakels mit einem Spaltmaß von 60 µm auf den Hilfsträger aufgerakelt. Das Trocknen erfolgte in einem Trockenofen, wobei der Vorgang bei einer Temperatur von 60 °C startete und die Temperatur innerhalb von 20 min weitgehend linear auf 90 °C anstieg. Nach 20 min wurde der Trockenvorgang beendet.

Nach dem Trocknen ergab sich ein Katalysatorauftrag von 10 bis 15 g/m² auf dem Hilfsträger. Der Katalysatorfilm zeigte sich homogen und ohne Risse.

Das Laminieren erfolgte zwischen den Platten einer Heizpresse des Typs Bürkle LAT 1,8. Zur Angabe des Pressdrucks wurde die Stempelkraft auf die Fläche der zu laminierenden Membran bezogen. Diese betrug durchgängig 20 cm². Um eventuelle Toleranzen in der Ebenheit der Pressplatten auszugleichen wurde der Pressverbund zunächst beidseitig, später einseitig mit einer ähnlich großen Silikongummiplatte abgedeckt. Die andere Seite war dann direkt in Kontakt mit der durch ein Trennpapier abgedeckten stählernen Heizpressplatte.

Für auf verschiedenen Hilfsträgern aufgebrachte Katalysatorschichten wurden umfangreiche Variationen der Parameter Temperatur, Druck und Presszeit durchgeführt, um die Möglichkeiten des beschriebenen Verfahrens aufzuzeigen. Dabei galt es insbesondere die thermische Belastbarkeit des Hilfsträgers zu beachten, die bei MOPPdeutlich geringer ist als bei PET-Materialien.

Die Ergebnisse der Laminierversuche sind in Tabelle 4 dargelegt.

**Tabelle 4: Laminieren der beschichteten Katalysatorpaste auf die Membran unter Verwendung einer Heizpresse**

| **Nr.** | **Hilfsträger** | **Platten** | **Temperatur [°C]** | **Druck [kPa]** | **Presszeit [s]** | **Laminierbarkeit** | **Bemerkungen** |
|---|---|---|---|---|---|---|---|
| 1 | 13 | Gummi- Gummi | 140 | 2000 | 30 | ++ | Hilfstr. knittert leicht |
| 2 | 13 | Gummi- Gummi | 130 | 2000 | 30 | ++ | Hilfstr. knittert leicht |
| 3 | 13 | Gummi- Gummi | 120 | 2000 | 135 | + | |
| 4 | 13 | Gummi- Gummi | 120 | 3100 | 30 | - | |
| 5 | 13 | Gummi- Gummi | 120 | 3500 | 30 | - | |
| 6 | 13 | Gummi- Gummi | 120 | 3800 | 30 | - | |
| 7 | 13 | Gummi- Gummi | 120 | 4400 | 30 | + | Hilfstr. knittert leicht |
| 8 | 13 | Gummi- Stahl | 130 | 4700 | 30 | ++ | |
| 9 | 13 | Gummi- Stahl | 120 | 4700 | 30 | ++ | |
| 10 | 13 | Gummi- Stahl | 110 | 4700 | 30 | ++ | auch beidseitig |
| 11 | 13 | Gummi- Stahl | 100 | 4700 | 30 | ++ | |
| 12 | 15 | Gummi- Stahl | 160 | 3100 | 30 | ++ | auch beidseitig |
| 13 | 15 | Gummi- Stahl | 160 | 3900 | 25 | ++ | |
| 14 | 15 | Gummi- Stahl | 160 | 4700 | 20 | ++ | |
| 15 | 15 | Gummi- Stahl | 160 | 5500 | 10 | ++ | auch beidseitig |
| 16 | 15 | Gummi- Stahl | 140 | 4700 | 15 | ++ | |
| 17 | 15 | Gummi- Stahl | 140 | 4400 | 5 | + | |
| 18 | 15 | Gummi- Stahl | 140 | 5500 | 5 | + | |
| 19 | 15 | Gummi- Stahl | 140 | 6300 | 5 | + | |
| 20 | 15 | Gummi- Stahl | 140 | 7100 | 5 | ++ | |
| 21 | 15 | Gummi- Stahl | 150 | 3900 | 5 | ++ | |
| 22 | 15 | Gummi- Stahl | 160 | 3100 | 5 | ++ | |
| 23 | 15 | Gummi- Stahl | 170 | 2400 | 5 | ++ | auch beidseitig |

Zunächst wird deutlich, dass die einseitige Belegung der Pressplatten mit Gummi Vorteile gegenüber der zweiseitigen Belegung hat, da mit der einseitigen Belegung bei höheren Drücken ein Knittern des Hilfsträgers vermieden wird (Nr. 1-11).

Die Versuche 1,2 und 8 - 11 hatten zum Ziel, die sehr gute Transferierbarkeit der Katalysatorschicht von den erfindungsgemäßen Hilfsträgern auf die Membran zu belegen. Dies kann für Hilfsträger und Membran sehr schonend bei niedrigen Temperaturen erfolgen. So konnte die Temperatur auf 100 °C bei nur 30 s Presszeit und hervorragender Laminierbarkeit gesenkt werden.

Die weiteren Versuche hatten zum Ziel, im Hinblick auf die Wirtschaftlichkeit des Verfahrens zu belegen, dass sehr kurze Presszeiten möglich sind. Die erreichten 5 s stellen dabei nicht die geringstmögliche Zeit dar, weniger konnte hier aber aufgrund der Trägheit der zur Verfügung stehenden Presse nicht realisiert werden. Die Temperatur konnte in einem für Membran und Hilfsträger moderaten Bereich gehalten werden (Nr. 16 bis 20). Bei höheren Temperaturen konnte wiederum der Druck abgesenkt werden (Nr. 20 bis 23).

Für die vorstehenden Versuche wurde die Membran zunächst einseitig laminiert. Reproduktionen einzelner Versuche mit gleichzeitiger zweiseitiger Laminierung ergaben keine Unterschiede.

### Beispiel 4: Laminieren der Katalysatorschicht auf die Membran zwischen zwei Walzen

Die Katalysatortinte wurde in einem kontinuierlichen Verfahren mittels eines Rakels mit einem Spaltmaß von 60 µm auf den Hilfsträger Nr. 15 aufgerakelt. Das Trocknen erfolgte in einem 10 m langen 4-Zonen-Durchlauf-Konvektionstrockenkanal, wobei Zone 1 mit 60 °C, Zone 2 mit 70 °C, Zone 3 mit 80 °C und Zone 4 mit 100 °C temperiert waren. Die Beschichtungsgeschwindigkeit betrug 0,5 m/min. Die beschichtete Bahn wurde nach Durchlaufen des Trockenkanals auf einen 6-Zoll-Pappkern aufgewickelt.

Nach dem Trocknen ergab sich ein Katalysatorauftrag von 10 bis 15 g/m² auf dem Hilfsträger. Der Katalysatorfilm zeigte sich homogen und ohne Risse.

Das Laminieren erfolgte kontinuierlich zwischen den Walzen verschiedener Laminatoren. Zur Angabe des Pressdrucks wurde die aufgebrachte Kraft auf die Breite der Katalysatorschicht bezogen. Diese betrug durchgängig 30 cm. Laminierversuche wurden mit unterschiedlichen Materialpaarungen (Stahl, Gummi) der Laminierwalzen durchgeführt.

Es wurden umfangreiche Variationen der Parameter Temperatur, Druck und Bahngeschwindigkeit durchgeführt, um die Möglichkeiten des beschriebenen Verfahrens aufzuzeigen. Dabei wurde vereinzelt auch eine Vorheizung des Hilfsträgers mittels Umschlingung einer Laminierwalze vorgenommen (s. Figur 1). Ist eine solche nicht angegeben, so berührten Hilfsträger und Membran die Walzen nur an der Laminierlinie (s. Figur 2). Ein Vorheizen der Membran wäre auch möglich, wurde aber zur Schonung derselben unterlassen.

Die Ergebnisse der Laminierversuche sind in Tabelle 5 dargelegt.

**Tabelle 5: Laminieren der beschichteten Katalysatorpaste auf die Membran unter Verwendung zweier Walzen**

| **Nr.** | **Walzen** | **Umschlingung Hilfsträger [°]** | **Temperatur Membranseite/ Hilfsträgerseite [°C]** | **Druck [N/cm]** | **Geschwindigkeit [m/min]** | **Laminierbarkeit** | **Abrieb der laminierten Katalysatorschicht** |
|---|---|---|---|---|---|---|---|
| 24 | Gummi- -Gummi | - | 130/130 | 20 | 0,25 | + | ++ |
| 25 | Gummi- Gummi | - | 130/130 | 20 | 0,5 | - | + |
| 26 | Gummi- Stahl | 180 | 90/170 | 64 | 0,2 | ++ | ++ |
| 27 | Gummi- Stahl | 180 | 110/170 | 64 | 1 | ++ | ++ |
| 28 | Gummi- Stahl | 180 | 120/170 | 64 | 1.5 | ++ | ++ |
| 29 | Gummi- Stahl | 180 | 120/170 | 64 | 2 | + | ++ |
| 30 | Stahl- Stahl | 90 | 120/170 | 650 | 2 | ++ | ++ |
| 31 | Stahl- Stahl | 90 | 1701170 | 650 | 5 | ++ | ++ |
| 32 | Stahl- Stahl | 90 | 1701170 | 650 | 10 | ++ | ++ |
| 33 | Stahl- Stahl | 90 | 170/170 | 650 | 20 | ++ | ++ |
| 34 | Stahl- Stahl | 90 | 170/170 | 200 | 20 | ++ | ++ |

Zunächst wird deutlich, dass mit zunehmender Temperatur der Laminierwalzen höhere Prozessgeschwindigkeiten erreicht werden konnten. Da bei der Laminierung mittels Gummiwalze gegen Stahlwalze die Gummiwalze nicht aktiv beheizt werden konnte und zudem der Laminierdruck nicht erhöht werden konnte, ist das Potenzial dieser Kombination als mit den Beispielen noch nicht ausgereizt anzusehen. Höhere Prozessgeschwindigkeiten sind sicher erreichbar. Bei der Kombination von zwei beheizten Stahlwalzen lag die Begrenzung in der einstellbaren Maschinengeschwindigkeit. Auch hier sind höhere Anlagengeschwindigkeiten erreichbar.

## Patentansprüche

1. Verfahren zur Herstellung eines Verbundes aus Katalysatormaterial und Festelektrolytmembran für eine elektrochemische Zelle, bei welchem das Katalysatormaterial zunächst auf einen abhäsiven Hilfsträger beschichtet und dort verfestigt wird und dann zumindest teilweise auf zumindest eine Seite der Membran laminiert wird, **dadurch gekennzeichnet, dass**
der abhäsive Hilfsträger mindestens eine Releaseschicht aufweist, die aus einem kondensations- oder strahlenvernetzten Organopolysiloxan besteht.

2. Verfahren zur Herstellung eines Verbundes aus Katalysatormaterial und Festelektrolytmembran für eine elektrochemische Zelle, bei welchem das Katalysatormaterial zunächst auf einen abhäsiven Hilfsträger beschichtet und dort verfestigt wird und dann zumindest teilweise auf zumindest eine Seite eines ein- oder mehrlagigen zweiten Trägermaterials laminiert wird, wobei der so entstandene Verbund aus dem zweiten Trägermaterial und dem Katalysatormaterial auf die Membran aufgebracht wird, **dadurch gekennzeichnet, dass**
der abhäsive Hilfsträger mindestens eine Releaseschicht aufweist, die aus einem kondensations- oder strahlenvernetzten Organopolysiloxan besteht.

3. Verfahren nach Anspruch 2, **dadurch gekennzeichnet, dass**
das zweite Trägermaterial eine Gasverteilerschicht ist.

4. Verfahren nach einem der vorangehenden Ansprüche, **dadurch gekennzeichnet, dass**
das Organopolysiloxan auf einem Polyalkylsiloxan basiert, bevorzugt auf einem Polydimethyldisiloxan.

5. Verfahren nach zumindest einem der vorangehenden Ansprüche, **dadurch gekennzeichnet, dass**
der Hilfsträger ein Papier, eine Folie, ein textiles Flächengebilde oder ein Verbund dieser Materialien ist, bevorzugt eine Metall- oder Polymerfolie ist.

6. Verfahren nach Anspruch 5, **dadurch gekennzeichnet, dass**
die Polymerfolie aus Polyester, Polyolefinen, Polyamid, Polycarbonat, Polyacrylat, Polyimid oder Polymethacrylat besteht.

7. Verfahren nach Anspruch 5, **dadurch gekennzeichnet, dass**
das Papier hochverdichtetes Glassin-Papier, Soft-Calendered-Papier, Machine-Finished-Papier, gestrichenes (Clay Coated) Papier oder polymerbeschichtetes Papier ist.

8. Verfahren nach zumindest einem der vorangehenden Ansprüche, **dadurch gekennzeichnet, dass**
der Hilfsträger eine regelmäßige oder unregelmäßige raue Mikrostruktur ausweist.

9. Verfahren nach zumindest einem der vorangehenden Ansprüche, **dadurch gekennzeichnet, dass**
der Hilfsträger mehrfach verwendet wird.

10. Verfahren nach zumindest einem der vorangehenden Ansprüche, **dadurch gekennzeichnet, dass**
das Katalysatormaterial in Form einer pastenförmigen Zubereitung ("Katalysatortinte") eingesetzt wird.

11. Verfahren nach Anspruch 10, **dadurch gekennzeichnet, dass**
die Katalysatortinte durch Rakeln, Pinseln, Walzenauftrag, Druckverfahren, Düsenverfahren, Sprühen oder Gießen in einem kontinuierlichen Prozess auf den Hilfsträger aufgetragen wird.

12. Verfahren nach zumindest einem der vorangehenden Ansprüche, **dadurch gekennzeichnet, dass**
das Katalysatormaterial in diskontinuierlichen Segmenten auf den Hilfsträger aufgebracht ist

13. Verfahren nach zumindest einem der vorangehenden Ansprüche, **dadurch gekennzeichnet, dass**
die Verfestigung des Katalysatormaterials durch zumindest teilweise Trocknung, insbesondere durch Trocknung mittels eines Temperaturprofils, welches von einer niedrigeren Starttemperatur auf eine höhere Zieltemperatur ansteigt, durch mechanische Energie, durch Strahlungsenergie und/oder durch Wärme erfolgt.

14. Verfahren nach zumindest einem der vorangehenden Ansprüche, **dadurch gekennzeichnet, dass**
die Membran beim Laminieren in der azidischen Form vorliegt.

15. Verfahren nach zumindest einem der vorangehenden Ansprüche, **dadurch gekennzeichnet, dass**
das Laminieren kontinuierlich, bevorzugt zwischen einem Walzenpaar erfolgt.

16. Verfahren nach Anspruch 15, **dadurch gekennzeichnet, dass**
der Durchmesser der Walzen größer als 200 mm, bevorzugt größer als 400 mm ist

17. Verfahren nach Anspruch 15, **dadurch gekennzeichnet, dass**
zumindest eine der Walzen aus gummielastischem Material besteht oder mit einer gummielastischen Beschichtung versehen ist.

18. Verfahren nach zumindest einem der vorangehenden Ansprüche, **dadurch gekennzeichnet dass**
das Laminieren bei einer Temperatur zwischen 100 und 250 °C, bevorzugt zwischen 140 und 200 °C durchgeführt wird.

19. Verfahren nach zumindest einem der vorangehenden Ansprüche, **dadurch gekennzeichnet dass**
das Laminieren bei einem Druck zwischen 500 und 10.000 kPa mittels eines Flachbettlaminierverfahrens durchgeführt wird.

20. Verfahren nach zumindest einem der vorangehenden Ansprüche, **dadurch gekennzeichnet dass**
das Laminieren bei einem Liniendruck zwischen 10 und 1.000 N/cm mittels eines Walzenlaminierverfahrens durchgeführt wird.

21. Verfahren nach Anspruch 15, **dadurch gekennzeichnet, dass**
beim Laminieren die Prozessgeschwindigkeit größer als 1 m/min ist, insbesondere zwischen 10 m/min und 200 m/min liegt.

22. Verfahren nach den Ansprüchen 15 und 21, **dadurch gekennzeichnet, dass**
beim Laminieren der Liniendruck kleiner als 700 N/cm ist und die Temperatur zwischen 120 und 200 °C liegt.

23. Verfahren nach zumindest einem der vorangehenden Ansprüche, **dadurch gekennzeichnet, dass**
zumindest eines der zu laminierenden Materialien vor der Laminierung aufgeheizt wird.

24. Verfahren nach zumindest einem der vorangehenden Ansprüche, **dadurch gekennzeichnet, dass**
das Laminieren beider Seiten der Membran gleichzeitig erfolgt.

## Claims

1. Process for producing a composite of catalyst material and solid electrolyte membrane for an electrochemical cell, in which the catalyst material is firstly applied to a repellent carrier and consolidated there and is then laminated at least partly onto at least one side of the membrane, **characterized in that** the repellent carrier has at least one release layer comprising a condensation- or radiation-crosslinked organopolysiloxane.

2. Process for producing a composite of catalyst material and solid electrolyte membrane for an electrochemical cell, in which the catalyst material is firstly applied to a repellent carrier and consolidated there and is then laminated at least partly onto at least one side of a single-layer or multilayer second support material, with the resulting composite of the second support material and the catalyst material being applied to the membrane, **characterized in that** the repellent carrier has at least one release layer comprising a condensation- or radiation-crosslinked organopolysiloxane.

3. Process according to Claim 2, **characterized in that** the second support material is a gas diffusion layer.

4. Process according to any of the preceding claims, **characterized in that** the organopolysiloxane is based on a polyalkylsiloxane, preferably a polydimethylsiloxane.

5. Process according to at least one of the preceding claims, **characterized in that** the carrier is a paper, a film, a textile or a composite of these materials, preferably a metal foil or polymer film.

6. Process according to Claim 5, **characterized in that** the polymer film comprises polyester, polyolefins, polyamide, polycarbonate, polyacrylate, polyimide or polymethacrylate.

7. Process according to Claim 5, **characterized in that** the paper is highly densified glassin paper, soft-calendered paper, machine-finished paper, clay-coated paper or polymer-coated paper.

8. Process according to at least one of the preceding claims, **characterized in that** the carrier has a regular or irregular rough microstructure.

9. Process according to at least one of the preceding claims, **characterized in that** the carrier is used a plurality of times.

10. Process according to at least one of the preceding claims, **characterized in that** the catalyst material is used in the form of a paste-like preparation ("catalyst ink").

11. Process according to Claim 10, **characterized in that** the catalyst ink is applied to the carrier in a continuous process by doctor blade coating, brushing, roller application, printing methods, jet application methods, spraying or casting.

12. Process according to at least one of the preceding claims, **characterized in that** the catalyst material is applied in discontinuous segments to the carrier.

13. Process according to at least one of the preceding claims, **characterized in that** consolidation of the catalyst material is effected by at least partial drying, in particular by drying by means of a temperature profile which increases from a low initial temperature to a higher target temperature, by means of mechanical energy, by means of radiation energy and/or by means of heat.

14. Process according to at least one of the preceding claims, **characterized in that** the membrane is present in the acidic form during lamination.

15. Process according to at least one of the preceding claims, **characterized in that** lamination is carried out continuously, preferably between a pair of rollers.

16. Process according to Claim 15, **characterized in that** the diameter of the rollers is greater than 200 mm, preferably greater than 400 mm.

17. Process according to Claim 15, **characterized in that** at least one of the rollers comprises rubbery-elastic material or is provided with a rubbery-elastic coating.

18. Process according to at least one of the preceding claims, **characterized in that** lamination is carried out at a temperature of from 100 to 250°C, preferably from 140 to 200°C.

19. Process according to at least one of the preceding claims, **characterized in that** lamination is carried out at a pressure of from 500 to 10 000 kPa by means of a flat-bed lamination process.

20. Process according to at least one of the preceding claims, **characterized in that** lamination is carried out at a line pressure of from 10 to 1000 N/cm by means of a roller lamination process.

21. Process according to Claim 15, **characterized in that** the process speed in the lamination step is greater than 1 m/min, in particular from 10 m/min to 200 m/min.

22. Process according to Claim 15 or 21, **characterized in that** the line pressure in the lamination step is less than 700 N/cm and the temperature is from 120 to 200°C.

23. Process according to at least one of the preceding claims, **characterized in that** at least one of the materials to be laminated is heated prior to lamination.

24. Process according to at least one of the preceding claims, **characterized in that** lamination of both sides of the membrane is carried out simultaneously.

## Revendications

1. Procédé pour la production d'un assemblage d'un matériau catalyseur et d'une membrane électrolytique solide pour une cellule électrochimique, dans lequel le matériau catalyseur est d'abord revêtu sur un support auxiliaire antiadhésif et y est solidifié, puis laminé au moins partiellement sur au moins une face de la membrane, **caractérisé en ce que** le support auxiliaire antiadhésif présente au moins une couche antiadhésive qui est constituée par un organopolysiloxane réticulé par condensation ou par des rayons.

2. Procédé pour la production d'un assemblage d'un matériau catalyseur et d'une membrane électrolytique solide pour une cellule électrochimique, dans lequel le matériau catalyseur est d'abord revêtu sur un support auxiliaire antiadhésif et y est solidifié, puis laminé au moins partiellement sur au moins une face d'un deuxième matériau support à une ou plusieurs couches, l'assemblage ainsi formé du deuxième matériau support et du matériau catalyseur étant appliqué sur la membrane, **caractérisé en ce que** le support auxiliaire antiadhésif présente au moins une couche antiadhésive qui est constituée par un organopolysiloxane réticulé par condensation ou par des rayons.

3. Procédé selon la revendication 2, **caractérisé en ce que** le deuxième matériau support est une couche de répartition de gaz.

4. Procédé selon l'une quelconque des revendications précédentes, **caractérisé en ce que** l'organopolysiloxane est à base d'un polyalkylsiloxane, de préférence à base d'un polydiméthyldisiloxane.

5. Procédé selon au moins l'une quelconque des revendications précédentes, **caractérisé en ce que** le support auxiliaire est un papier, une feuille, une structure plane textile ou un assemblage de ces matériaux, de préférence une feuille en métal ou en polymère.

6. Procédé selon la revendication 5, **caractérisé en ce que** la feuille en polymère est en polyester, en polyoléfine, en polyamide, en polycarbonate, en polyacrylate, en polyimide ou en polyméthacrylate.

7. Procédé selon la revendication 5, **caractérisé en ce que** le papier est du papier glassine hautement compacté, du papier calandré doux ("Soft-Calendered"), du papier apprêté-calandré, du papier couché (papier au kaolin) ou revêtu de polymère.

8. Procédé selon au moins l'une quelconque des revendications précédentes, **caractérisé en ce que** le support auxiliaire présente une microstructure rugueuse régulière ou irrégulière.

9. Procédé selon au moins l'une quelconque des revendications précédentes, **caractérisé en ce que** le support auxiliaire est utilisé plusieurs fois.

10. Procédé selon au moins l'une quelconque des revendications précédentes, **caractérisé en ce que** le matériau catalyseur est utilisé sous forme d'une préparation en forme de pâte ("encre de catalyseur").

11. Procédé selon la revendication 10, **caractérisé en ce que** l'encre de catalyseur est appliquée par raclage, enduction, application par un cylindre, un procédé d'impression, un procédé avec des gicleurs, par pulvérisation ou coulage dans un procédé continu sur le support auxiliaire.

12. Procédé selon au moins l'une quelconque des revendications précédentes, **caractérisé en ce que** le matériau de catalyseur est appliqué en des segments discontinus sur le support auxiliaire.

13. Procédé selon au moins l'une quelconque des revendications précédentes, **caractérisé en ce que** la solidification du matériau catalyseur est réalisée par un séchage, au moins partiel, en particulier par un séchage au moyen d'un profil de température, qui augmente à partir d'une température de départ basse à une température cible élevée par une énergie mécanique, une énergie de rayonnement et/ou de la chaleur.

14. Procédé selon au moins l'une quelconque des revendications précédentes, **caractérisé en ce que** la membrane se trouve sous forme acide lors du laminage.

15. Procédé selon au moins l'une quelconque des revendications précédentes, **caractérisé en ce que** le laminage est réalisé en continu, de préférence entre une paire de cylindres.

16. Procédé selon la revendication 15, **caractérisé en ce que** le diamètre des cylindres est supérieur à 200 mm, de préférence supérieur à 400 mm.

17. Procédé selon la revendication 15, **caractérisé en ce qu'**au moins un des cylindres est en matériau élastique caoutchouteux ou est pourvu d'un revêtement élastique caoutchouteux.

18. Procédé selon au moins l'une quelconque des revendications précédentes, **caractérisé en ce que** le laminage est réalisé à une température entre 100 et 250°C, de préférence entre 140 et 200°C.

19. Procédé selon au moins l'une quelconque des revendications précédentes, **caractérisé en ce que** le laminage est réalisé à une pression entre 500 et 10 000 kPa au moyen d'un procédé de laminage à lit plat.

20. Procédé selon au moins l'une quelconque des revendications précédentes, **caractérisé en ce que** le laminage est réalisé à une pression de la ligne entre 10 et 1000 N/cm au moyen d'un procédé de laminage à cylindres.

21. Procédé selon la revendication 15, **caractérisé en ce que** lors du laminage, la vitesse de procédé est supérieure à 1 m/min, en particulier entre 10 m/min et 200 m/min.

22. Procédé selon les revendications 15 et 21, **caractérisé en ce que** lors du laminage, la pression de la ligne est inférieure à 700 N/cm et la température est située entre 120 et 200°C.

23. Procédé selon au moins l'une quelconque des revendications précédentes, **caractérisé en ce qu'**au moins un des matériaux à laminer est chauffé avant le laminage.

24. Procédé selon au moins l'une quelconque des revendications précédentes, **caractérisé en ce que** le laminage des deux faces de la membrane est réalisé simultanément.
